# EUROPÄISCHE PATENTSCHRIFT

(11) **EP 3 848 109 B1**
(45) Veröffentlichungstag und Bekanntmachung des Hinweises auf die Patenterteilung: **02.03.2022**
(21) Anmeldenummer: 20150665.6
(22) Anmeldetag: 08.01.2020
(51) Int. Cl.: B01D 46/00, B01D 46/10, B01D 46/12

(54) **FILTER MIT RAHMEN AUS ELASTOMER UND FILTERANORDNUNG MIT SOLCHEM FILTER**
FILTER WITH ELASTOMER FRAME AND FILTER ASSEMBLY WITH SUCH A FILTER
FILTRE POURVU DE CADRE D'ÉLASTOMÈRE ET DISPOSITIF FILTRANT DOTÉ D'UN TEL FILTRE

(43) Veröffentlichungstag der Anmeldung: 14.07.2021
(73) Patentinhaber: Carl Freudenberg KG, 69469 Weinheim (DE)
(72) Erfinder: Sieh, Maik, 69207 Sandhausen (DE); Schumacher, Sascha, 69483 Wald-Michelbach (DE); Chimside, Morfula, 68723 Schwetzingen (DE); Menzio, Giacomo, 10139 Torino (IT)

(56) Entgegenhaltungen:
- EP-A2- 2 133 550
- CN-A- 101 564 628
- DE-A1- 10 111 318
- DE-A1-102014 225 905
- DE-C1- 19 647 043

## Beschreibung

Die Erfindung betrifft einen Filter gemäß dem Oberbegriff von Anspruch 1 und eine Filteranordnung gemäß Anspruch 11 und 12.

### Stand der Technik

Es ist bekannt, Filteranordnungen zur Aufbereitung der Kabinenluft von Fahrzeugen einzusetzen. Aus der EP 3 015 155 A1 ist eine Filteranordnung bekannt, bei welchem die Filteraufgaben Adsorptionsfiltration und Partikelfiltration in einem Filter zusammengefasst sind. Dabei hält die als Partikelfilter ausgebildete Filterlage partikelförmige Bestandteile aus der Luft zurück, beispielsweise Staub und Pollen. Die als Adsorptionsfilter ausgebildete Filterlage hält unerwünschte gasförmige Bestandteile aus der Luft zurück, beispielsweise Schadgase, Dämpfe von Pflanzenschutzmitteln, Dämpfe von Düngemitteln, Gerüche, Benzol oder Ozon. Ein weiteres Filterelement ist aus der DE 102014225905 A1 bekannt. Dieses weist einen Rahmen aus einem Elastomer auf, mit welchem das Filtermedium form- oder stoffschlüssig verbunden ist.

Räume von Gebäuden müssen von für Menschen gesundheitsschädlichen Stoffen, insbesondere von Gasen und Dämpfen, in hohem Maße zuverlässig freigehalten werden. Dazu kommen in Haushalten zunehmend mobile Luftreinigungsgeräte mit Filteranordnungen zum Einsatz.

Unabhängig von ihrem Einsatzgebiet ist es wichtig, dass die Filteranordnungen eine geringe Leckage aufweisen. Es muss vermieden werden, dass ein zu reinigender Luftstrom die Filteranordnung passiert, ohne die Filterelemente zu durchströmen und dabei gefiltert zu werden. Im Stand der Technik werden die Filterelemente daher regelmäßig in Rahmen eingeklebt. Auf die Außenkante des Rahmens werden Dichtungen aufgeklebt. Dabei verwendete Rahmen werden beispielsweise aus Thermoplasten im Spritzgussverfahren hergestellt.

Für den Prozessschritt des Einklebens bzw. Aufklebens wird ein recht großer Aufwand betrieben, was die Prozessvorbereitung und das erforderliche Equipment anbelangt, insbesondere bei der leckagefreien Integration der Filterstufen.

Wenn Gehäuse zur Aufnahme von Filtern in ihren Abmaßen variieren, so müssen in der Regel auch die Abmaße des Rahmens angepasst werden. Da Rahmen unterschiedlicher Größe auch unterschiedliche Spritzgusswerkzeuge erfordern, gehen damit hohe Kosten einher.

### Aufgabenstellung

Aufgabe der vorliegenden Erfindung ist es einen Filter zu schaffen, welcher eine möglichst geringe Leckage aufweist, bevorzugt leckagefrei ist, und gleichzeitig einfach zu fertigen ist.

Weitere Aufgabe der vorliegenden Erfindung ist es eine Filteranordnung zu schaffen, welche eine möglichst geringe Leckage aufweist, bevorzugt leckagefrei ist, und gleichzeitig einfach zu fertigen ist.

### Technische Lösung

Gelöst wird diese Aufgabe durch einen Filter mit den Merkmalen von Anspruch 1.

Erfindungsgemäß wurde als vorteilhaft erkannt, einen Rahmen aus Elastomer zur Aufnahme von Filterelementen zu verwenden:
Der erfindungsgemäße Filter dient zur Filtration eines Luftstroms. Der Filter besitzt mindestens ein Filterelement, aufweisend mindestens ein erstes Filtermedium, und einen Rahmen mit mindestens einer Ausnehmung zur Aufnahme des mindestens einen Filterelements. Das mindestens eine Filterelement wird dabei in dem Rahmen gehalten.

In vorteilhafter Weise ist der Rahmen einteilig aus einem Elastomer gefertigt und ist elastisch. Der Rahmen kann insbesondere in einem Spritzgussverfahren hergestellt sein. Im Bereich der Ausnehmungen ist zwischen mindestens einem Filterelement und dem Rahmen mindestens eine innere Dichtlippe vorgesehen, um ein jeweiliges Filterelement relativ zu einer jeweiligen Ausnehmung abzudichten. Ein derartiger Filter hat den Vorteil, dass die Filterelemente nicht in den Rahmen eingeklebt werden müssen. Dank der Elastizität des Rahmens liegen die Filterelemente gut an den inneren Dichtlippen an. Die Filterelemente sind formschlüssig in dem Rahmen aufgenommen.

In vorteilhafter Weiterbildung des Filters ist auch entlang der Außenkante des Rahmens mindestens eine weitere, äußere Dichtlippe vorgesehen, um den Rahmen relativ zu einem den Rahmen aufnehmenden Gehäuse abzudichten. Die äußere Dichtlippe erlaubt eine gute Abdichtung zu einem aufnehmenden Gehäuse und bietet einen gewissen Toleranzausgleich bei variierenden Gehäuseabmaßen. Ein derartiger Filter hat den Vorteil, dass keine Dichtungen auf die Außenkante aufgeklebt werden müssen zur Abdichtung gegenüber einem Gehäuse.

In vorteilhafter Weiterbildung des erfindungsgemäßen Filters ist die mindestens eine innere Dichtlippe und/oder die äußere Dichtlippe umlaufend ausgeführt, d.h. ohne Unterbrechung und insbesondere nahtlos. Leckagestellen können so vermieden werden.

In Weiterbildung des Filters kann die mindestens eine innere Dichtlippe und/oder die äußere Dichtlippe als Doppellippe mit je zwei Dichtkanten ausgestaltet sein. Dadurch wird selbst bei gekrümmten Formen des Rahmens eine gute Abdichtung gewährleistet.

In einer besonders vorteilhaften und daher bevorzugten Ausführungsvariante des erfindungsgemäßen Filters besitzt der Rahmen eine Mehrzahl von Ausnehmungen und eine entsprechende Mehrzahl von Filterelementen, und ein jeweiliges Filterelement ist in einer jeweiligen Ausnehmung aufgenommen. Die Ausgestaltung des Rahmens ist dabei derart, dass eine gitterartige Rahmenstruktur gebildet wird.

Als vorteilhaft hat es sich dabei erwiesen, wenn der Rahmen einen äußeren Rand und innere Stege besitzt und zumindest die Stege - in einem Schnitt senkrecht zu ihrer Erstreckung betrachtet - eine sich verjüngende, insbesondere eine V-förmige Gestaltung aufweisen. Dies ermöglicht es, dass Filterelemente gut in die Ausnehmungen des Rahmens eingesetzt werden können.

In Weiterbildung kann der Filter mindestens zwei Filterstufen und der Rahmen mindestens zwei parallel zueinander angeordnete innere Dichtlippen besitzen. Eine jeweilige der parallelen inneren Dichtlippen ist dann einer jeweiligen Filterstufe zugeordnet. Das mindestens eine Filterelement einer jeweiligen Filterstufe liegt an der oder den Dichtlippen der Filterstufe an. Beispielsweise können als verschiedene Filterstufen eine Vorfilterstufe, eine Adsorptionsfilterstufe, eine Partikelfilterstufe und/oder eine Feinfilterstufe vorgesehen sein.

In Weiterbildung des Filters kann das mindestens eine Filterelement mindestens einer Filterstufe noch zusätzlich in den Rahmen eingeklebt sein. Dadurch kann die Dichtheit weiter erhöht werden. Besonders bei hocheffizienten Filterstufen, wie z.B. unter Verwendung von HEPA-Filterelementen ist eine Leckagefreiheit erforderlich.

Das mindestens eine Filterelement des Filters kann als Formkörper aus gasadsorbierendem Material, insbesondere als Aktivkohle-Wabenkörper ausgeführt sein. Wird eine Mehrzahl von Formkörpern in einer Filterstufe matrixartig zusammengesetzt, so bietet sich eine gitterartige Rahmenstruktur zur Aufnahme der Formkörper an.

Ein Filterelement des Filters kann ein partikelfilterndes Filtermedium aufweisen, insbesondere aus einem Vliesstoff.

Es wurde gefunden, dass sich als Material für den Rahmen des Filters ein thermoplastisches Elastomer (TPE) oder thermoplastische Vulkanisate (TPV) beziehungsweise ein vernetztes thermoplastisches Elastomer auf Olefin-Basis besonders eignen.

Die Erfindung betrifft auch eine Filteranordnung mit einem Gehäuse und einem wie vorstehend beschriebenen Filter, wobei der Filter in dem Gehäuse formschlüssig aufgenommen ist. Der Filter liegt mit seiner äußeren Dichtlippe des Rahmens an dem Gehäuse an.

In einer alternativen Ausgestaltung der Filteranordnung besitzt diese ebenfalls ein Gehäuse und einem wie vorstehend beschriebenen Filter, wobei der Filter in dem Gehäuse stoffschlüssig aufgenommen ist, indem der Rahmen in seinem äußeren Bereich umlaufend direkt mit dem Gehäuse verbunden ist. Dies kann durch Anspritzen des Rahmens an das Gehäuse erfolgen, wobei Gehäuse und Rahmen insbesondere im Zweikomponenten-Spritzgussverfahren hergestellt sein können.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: einen Rahmen aus Elastomer in einer räumlichen Darstellung
- Fig. 2a: den Rahmen aus Fig. 1 in einer seitlichen Ansicht
- Fig. 2b: die Montage des Rahmens in ein Gehäuse
- Fig. 3: einen erfindungsgemäßen Filter
- Fig. 4b: eine erfindungsgemäße Filteranordnung mit drei Filterstufen

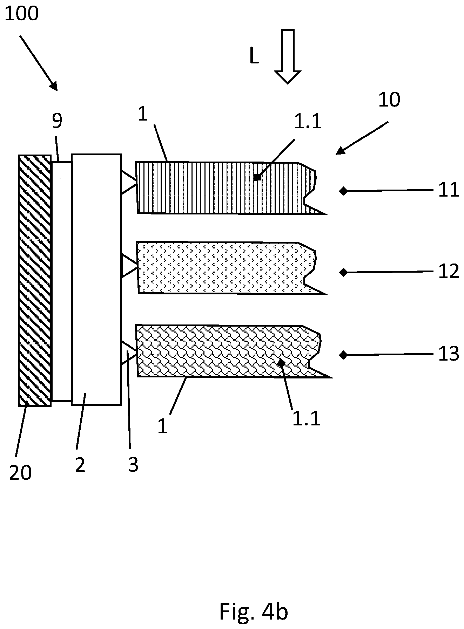

- Fig. 4b: eine alternative erfindungsgemäße Filteranordnung mit drei Filterstufen

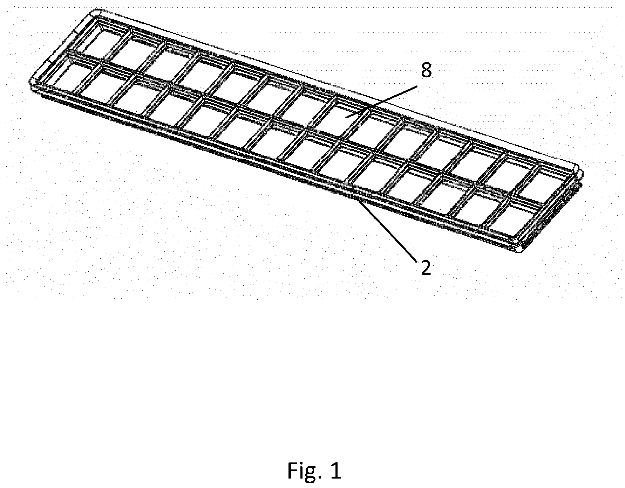

Fig. 1 zeigt einen Rahmen 2 aus Elastomer für einen Filter 10 in einer räumlichen Darstellung. Der Rahmen 2 besitzt eine gitterartige Struktur und weist eine Mehrzahl von Ausnehmungen 8 auf, in welchen Filterelemente 1 (nicht dargestellt) aufgenommen werden können. Der Rahmen 2 ist aus einem Elastomer gefertigt.

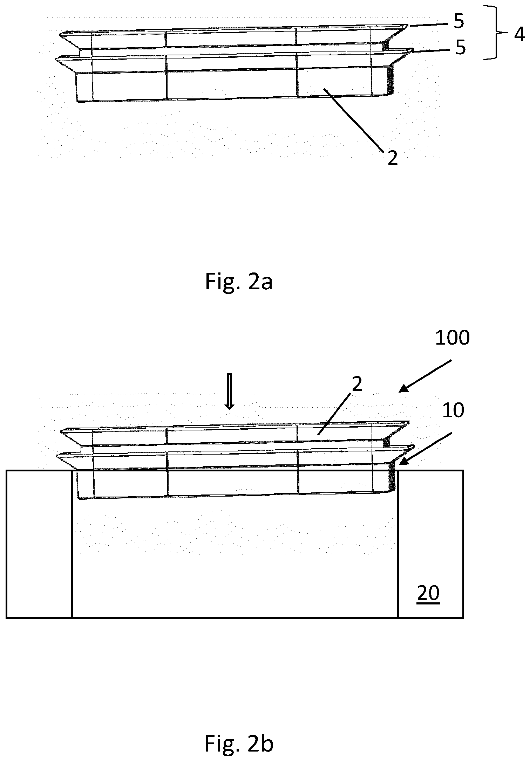

Fig. 2a zeigt den Rahmen 2 aus Fig. 1 in einer seitlichen Ansicht. Dabei ist zu erkennen, dass die äußere Dichtkante 4, welche umlaufend am äußeren Rand des Rahmens 2 angeordnet ist, als Doppellippe mit zwei Dichtkanten 5 ausgeführt ist.

Fig. 2b zeigt die Montage des Filters 10 mit dem Rahmen 2 in ein Gehäuse 20. Es ist zu erkennen, dass die äußere Dichtlippe 4 ein Übermaß relativ zur Ausnehmung im Gehäuse 20 besitzt. Dadurch wird zum einen ein guter und dichter Sitz des Filters 10 in dem Gehäuse 20 (Presssitz) als auch ein gewisser Toleranzausgleich realisiert. Die Einschubrichtung bei Montage ist durch einen Pfeil angedeutet. Dank der Doppellippe mit zwei Dichtkanten 5 wird eine besonders gute Abdichtung zwischen Filter 10 und Gehäuse 20 erreicht.

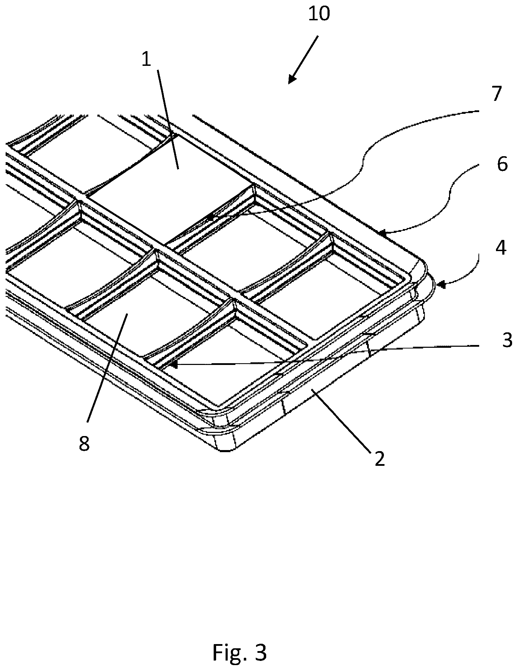

Fig. 3 zeigt einen erfindungsgemäßen Filter 10 mit einem Rahmen 2 in einer Ausschnittsdarstellung. Der Rahmen 2 besitzt eine gitterartige Struktur und weist eine Mehrzahl von Ausnehmungen 8 auf, in welchen Filterelemente 1 aufgenommen werden können. Zur besseren Erkennbarkeit der Struktur des Rahmens 2 ist beispielhaft nur ein Filterelement 1 dargestellt, welches in einer Ausnehmung 8 des Rahmens 2 gehalten wird. Bei einem fertig montierten Filter 10 sind alle Ausnehmungen 8 mit Filterelementen 1 gefüllt. Der Rahmen 2 besitzt einen Rand 6, welcher an seiner äußeren Kante die bereits erwähnte äußere Dichtlippe 4 aufweist. Innerhalb des Randes 6 wird die gitterartige Struktur des Rahmens 2 durch mehrere Stege 7 gebildet. Im Bereich einer jeweiligen Ausnehmung 8 ist jeweils eine innere Dichtlippe 3 vorgesehen. Die innerer Dichtlippe 3 begrenzt die jeweilige Ausnehmung 8 und ein jeweiliges Filterelement 2 liegt an der inneren Dichtlippe 3 an. Dank entsprechender Toleranzen von Filterelementen 1 und Ausnehmungen 8 wird ein guter und dichter Sitz des jeweiligen Filterelements 1 in der jeweiligen Ausnehmung 8 (Presssitz) realisiert.

Die Stege 7 weisen eine sich verjüngende, insbesondere eine V-förmige Gestaltung auf. Filterelemente 1 können von der Seite der schmalen Kanten der Stege 7 in die Ausnehmungen 8 eingesetzt werden.

Bei den Filterelementen 1 in diesem Ausführungsbeispiel handelt es sich um Formkörper mit einer Vielzahl von Aktivkohlewaben. Dank des Rahmens 2 können die Formkörper mit relativ kleinen Abmaßen produziert und zu einem großflächigen Filter 10 zusammengesetzt werden.

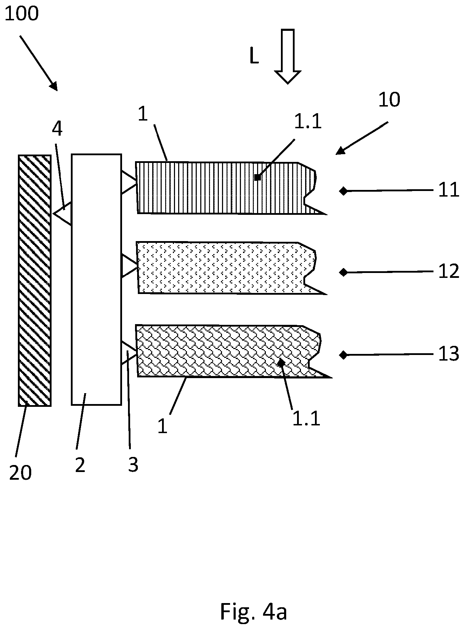

Fig. 4a zeigt eine erfindungsgemäße Filteranordnung 100 mit einem Filter 10 mit drei Filterstufen 11, 12, 13 und mit einem Gehäuse 20 wobei der Filter 10 in dem Gehäuse 20 formschlüssig aufgenommen ist. Eine jeweilige Filterstufe 11, 12, 13 besitzt zumindest ein Filterelement 1, welches in einer Ausnehmung 8 des Rahmens 2 aufgenommen ist. Der Rahmen 2 besitzt mindestens für jede Filterstufe 11, 12, 13 eine innere Dichtlippe 3, um ein jeweiliges Filterelement 1 der Filterstufe 11, 12, 13 relativ zu dem Rahmen 2 abzudichten. Der Filter 10 liegt mit seiner äußeren Dichtlippe 4 des Rahmens 2 an dem Gehäuse 20 an. Die Filterelemente 1 der Filterstufen 11, 12, 13 können unterschiedliche Filtermedien 1.1 aufweisen.

Beispielsweise können als verschiedene Filterstufen eine Vorfilterstufe 11, eine Adsorptionsfilterstufe 12 und eine Partikelfilterstufe 13 vorgesehen sein.

Fig. 4b zeigt eine ähnlich aufgebaute erfindungsgemäße Filteranordnung 100 mit einem Filter 10 mit drei Filterstufen 11, 12, 13 und mit einem Gehäuse 20 wobei der Filter 10 in dem Gehäuse 20 stoffschlüssig aufgenommen ist. Eine jeweilige Filterstufe 11, 12, 13 besitzt zumindest ein Filterelement 1, welches in einer Ausnehmung 8 des Rahmens 2 aufgenommen ist. Der Rahmen 2 besitzt mindestens für jede Filterstufe 11, 12, 13 eine innere Dichtlippe 3, um ein jeweiliges Filterelement 1 der Filterstufe 11, 12, 13 relativ zu dem Rahmen 2 abzudichten. Der Filter 10 ist in seinem äußeren Bereich 9 des Rahmens 2 an das Gehäuse 20 angespritzt.

### Bezugszeichenliste

- 1: Filterelement
- 1.1: Filtermedium
- 2: Rahmen
- 3: innere Dichtlippe
- 4: äußere Dichtlippe
- 5: Dichtkante
- 6: Rand
- 7: Steg
- 8: Ausnehmung
- 9: äußerer Bereich des Rahmens, angespritzt an Gehäuse

- 10: Filter
- 11: erste Filterstufe
- 12: zweite Filterstufe
- 13: dritte Filterstufe
- 20: Gehäuse

- 100: Filteranordnung

- L: Luftstrom

## Patentansprüche

1. Filter (10) zur Filtration eines Luftstroms (L) mit mindestens einem Filterelement (1) aufweisend mindestens ein erstes Filtermedium (1.1) und mit einem Rahmen (2) mit mindestens einer Ausnehmung (8) zur Aufnahme des mindestens einen Filterelements (1), wobei das mindestens eine Filterelement (1) in dem Rahmen (2) gehalten wird,
**dadurch gekennzeichnet, dass**
der Rahmen (2) aus einem Elastomer ist und,
dass im Bereich der mindestens einen Ausnehmung (8) zwischen mindestens einem Filterelement (1) und dem Rahmen (2) mindestens eine innere Dichtlippe (3) vorgesehen ist.

2. Filter nach Anspruch 1, **dadurch gekennzeichnet, dass** die mindestens eine innere Dichtlippe (3) umlaufend ausgeführt ist.

3. Filter nach einem der vorangehenden Ansprüche, **dadurch gekennzeichnet, dass**
die mindestens eine innere Dichtlippe (3) als Doppellippe mit je zwei Dichtkanten (5) ausgestaltet ist.

4. Filter nach einem der vorangehenden Ansprüche, **dadurch gekennzeichnet, dass**
der Rahmen (2) eine Mehrzahl von Ausnehmungen (8) und eine Mehrzahl von Filterelementen (1) besitzt, und dass ein jeweiliges Filterelement (1) in einer jeweiligen Ausnehmung (8) aufgenommen ist.

5. Filter nach Anspruch 4, **dadurch gekennzeichnet, dass** der Rahmen (2) einen äußeren Rand (6) und innere Stege (7) besitzt, wobei zumindest die Stege (7) eine sich verjüngende, insbesondere eine V-förmige Gestaltung aufweisen.

6. Filter nach einem der vorangehenden Ansprüche, **dadurch gekennzeichnet, dass**
der Filter (10) mindestens zwei Filterstufen (11, 12, 13) und der Rahmen (2) mindestens zwei parallel zueinander angeordnete innere Dichtlippen (3) besitzt, und
dass eine jeweilige der parallelen inneren Dichtlippen (3) einer jeweiligen Filterstufe (11, 12, 13) zugeordnet ist.

7. Filter nach einem der vorangehenden Ansprüche, **dadurch gekennzeichnet, dass**
das mindestens eine Filterelement (1) als Formkörper aus gasadsorbierendem Material, insbesondere als Aktivkohle-Wabenkörper ausgeführt ist.

8. Filter nach einem der Ansprüche 1 bis 6, **dadurch gekennzeichnet, dass** das mindestens eine Filterelement (1) ein partikelfilterndes Filtermedium aufweist, insbesondere einen Vliesstoff.

9. Filter nach einem der vorangehenden Ansprüche, **dadurch gekennzeichnet, dass**
es sich bei dem Elastomer um ein thermoplastisches Elastomer oder um thermoplastische Vulkanisate beziehungsweise um ein vernetztes thermoplastisches Elastomer auf Olefin-Basis handelt.

10. Filter nach einem der vorangehenden Ansprüche, **dadurch gekennzeichnet, dass**
entlang der Außenkante des Rahmens (2) mindestens eine weitere, äußere Dichtlippe (4) vorgesehen ist,
und dass die äußere Dichtlippe (4) insbesondere umlaufend ausgeführt ist,
und dass die äußere Dichtlippe (4) insbesondere als Doppellippe mit je zwei Dichtkanten (5) ausgestaltet ist.

11. Filteranordnung (100) mit einem Gehäuse (20) und einem Filter (10) nach Anspruch 10, wobei der Filter (10) formschlüssig in dem Gehäuse (20) aufgenommen ist.

12. Filteranordnung (100) mit einem Gehäuse (20) und einem Filter (10) nach einem der Ansprüche 1 bis 9, wobei der Filter (10) stoffschlüssig in dem Gehäuse (20) aufgenommen ist.

## Claims

1. Filter (10) for filtration of an air stream (L), having at least one filter element (1), which has at least one first filter medium (1.1), and having a frame (2), which has at least one cutout (8) for accommodating the at least one filter element (1), wherein the at least one filter element (1) is held in the frame (2),
**characterized in that**
the frame (2) is composed of an elastomer, and
**in that**, in the region of the at least one cutout (8), at least one inner sealing lip (3) is provided between at least one filter element (1) and the frame (2).

2. Filter according to Claim 1, **characterized in that** the at least one inner sealing lip (3) is configured so as to run around in a peripheral manner.

3. Filter according to one of the preceding claims, **characterized in that**
the at least one inner sealing lip (3) is designed as a double lip with in each case two sealing edges (5) .

4. Filter according to one of the preceding claims, **characterized in that**
the frame (2) has a plurality of cutouts (8) and a plurality of filter elements (1), and **in that** a respective filter element (1) is accommodated in a respective cutout (8).

5. Filter according to Claim 4, **characterized in that** the frame (2) has an outer boundary (6) and inner webs (7), wherein at least the webs (7) have a narrowing, in particular a V-shaped, configuration.

6. Filter according to one of the preceding claims, **characterized in that**
the filter (10) has at least two filter stages (11, 12, 13), and the frame (2) has at least two inner sealing lips (3) which are arranged parallel to one another, and
**in that** a respective one of the parallel inner sealing lips (3) is assigned to a respective filter stage (11, 12, 13) .

7. Filter according to one of the preceding claims, **characterized in that**
the at least one filter element (1) is configured as a moulded body composed of gas-adsorbing material, in particular as an activated carbon honeycomb body.

8. Filter according to one of Claims 1 to 6, **characterized in that**
the at least one filter element (1) has a particle-filtering filter medium, in particular a nonwoven.

9. Filter according to one of the preceding claims, **characterized in that**
the elastomer is a thermoplastic elastomer or thermoplastic vulcanizate or a crosslinked olefin-based thermoplastic elastomer.

10. Filter according to one of the preceding claims, **characterized in that**
at least one further, outer, sealing lip (4) is provided along the outer edge of the frame (2), and **in that** the outer sealing lip (4) is configured in particular so as to run around in a peripheral manner,
and **in that** the outer sealing lip (4) is designed in particular as a double lip with in each case two sealing edges (5).

11. Filter arrangement (100) having a housing (20) and having a filter (10) according to Claim 10, wherein the filter (10) is accommodated in a form-fitting manner in the housing (20).

12. Filter arrangement (100) having a housing (20) and having a filter (10) according to one of Claims 1 to 9, wherein the filter (10) is accommodated in a materially bonded manner in the housing (20).

## Revendications

1. Filtre (10) destiné à filtrer un flux d'air (L), ledit filtre comprenant au moins un élément filtrant (1) pourvu d'au moins un premier milieu filtrant (1.1) et un cadre (2) pourvu d'au moins un évidement (8) destiné à recevoir l'au moins un élément filtrant (1), l'au moins un élément filtrant (1) étant maintenu dans le cadre (2), **caractérisé en ce que**
le cadre (2) est en élastomère et
au moins une lèvre d'étanchéité intérieure (3) est prévue dans la zone de l'au moins un évidement (8) entre au moins un élément filtrant (1) et le cadre (2).

2. Filtre selon la revendication 1, **caractérisé en ce que**
l'au moins une lèvre d'étanchéité intérieure (3) est réalisée de manière circonférentielle.

3. Filtre selon l'une des revendications précédentes, **caractérisé en ce que**
l'au moins une lèvre d'étanchéité intérieure (3) est réalisée sous la forme d'une double lèvre pourvue à chaque fois de deux bords d'étanchéité (5).

4. Filtre selon l'une des revendications précédentes, **caractérisé en ce que**
le cadre (2) comporte une pluralité d'évidements (8) et une pluralité d'éléments filtrants (1), et un élément filtrant respectif (1) est reçu dans un évidement respectif (8) .

5. Filtre selon la revendication 4, **caractérisé en ce que**
le cadre (2) possède un bord extérieur (6) et des nervures intérieures (7), au moins les nervures (7) ayant une forme effilée, en particulier en forme de V.

6. Filtre selon l'une des revendications précédentes, **caractérisé en ce que**
le filtre (10) possède au moins deux étages de filtration (11, 12, 13) et le cadre (2) possède au moins deux lèvres d'étanchéité intérieures (3) disposées parallèlement l'une à l'autre, et
une lèvre respective des lèvres d'étanchéité intérieures parallèles (3) est associée à un étage de filtration respectif (11, 12, 13).

7. Filtre selon l'une des revendications précédentes, **caractérisé en ce que**
l'au moins un élément filtrant (1) est réalisé sous la forme d'un corps moulé en matériau absorbant les gaz, en particulier sous la forme d'un corps en nid d'abeilles en charbon actif.

8. Filtre selon l'une quelconque des revendications 1 à 6, **caractérisé en ce que** l'au moins un élément filtrant (1) comporte un milieu filtrant à filtration de particules, notamment un non-tissé.

9. Filtre selon l'une des revendications précédentes, **caractérisé en ce que**
l'élastomère est un élastomère thermoplastique ou des vulcanisats thermoplastiques ou un élastomère thermoplastique réticulé à base d'oléfines.

10. Filtre selon l'une des revendications précédentes, **caractérisé en ce que**
au moins une autre lèvre d'étanchéité extérieure (4) est prévue le long du bord extérieur du cadre (2),
et la lèvre d'étanchéité extérieure (4) est réalisée en particulier de manière circonférentielle,
et la lèvre d'étanchéité extérieure (4) est conçue en particulier sous la forme d'une double lèvre pourvue à chaque fois de deux bords d'étanchéité (5).

11. Ensemble de filtration (100) comprenant un boîtier (20) et un filtre (10) selon la revendication 10, le filtre (10) étant reçu dans le boîtier (20) par complémentarité de formes.

12. Ensemble de filtration (100) comprenant un boîtier (20) et un filtre (10) selon l'une des revendications 1 à 9, le filtre (10) étant reçu dans le boîtier (20) par liaison de matière.
